# EUROPEAN PATENT APPLICATION

(11) **EP 1 804 178 A1**
(43) Date of publication of application: **04.07.2007**
(21) Application number: 06026087.4
(22) Date of filing: 15.12.2006
(51) Int. Cl.: G06F 17/30

(54) **Handling ambiguous joins between data structures**

(30) Priority: 30.12.2005 US 322625
(71) Applicant: SAP AG, 69190 Walldorf (DE)
(72) Inventor: Dipper, Stefan, 69168 Wiesloch (DE); Rueger, Christel, 63450 Hanau (DE)
(74) Representative: Müller-Boré & Partner Patentanwälte

(57) **Abstract**

Systems and techniques for handling potentially ambiguous joins. In one aspect, an article includes a machine-readable medium storing instructions operable to cause one or more machines to perform operations. The operations include receiving a query that includes an ambiguous join of at least two data tables in a relational database, reducing a number of join partners in at least one of the at least two data tables by locally aggregating first data on a first side of the ambiguous join, and joining the locally aggregated first data and second data from the second side of the ambiguous join on a join condition in the ambiguous join. The ambiguous join identifies fewer fields than necessary to define a unique key between the data tables and the unidentified fields are omitted from any global unique restriction in the query.

## Description

### BACKGROUND

This disclosure relates to handling ambiguous joins.

A join is a direction to combine, or a combination of, two or more data structures in a relational database. A join can be part of a query and can operate on a field that is common to the data structures. The common field is usually part of a key relationship between the data structures. For example, the common field can be a primary key in one data structure and a foreign key in a second data structure: A join can retrieve data from both such data structures. The data structures can be data objects, data tables, and the like (hereinafter "data tables").

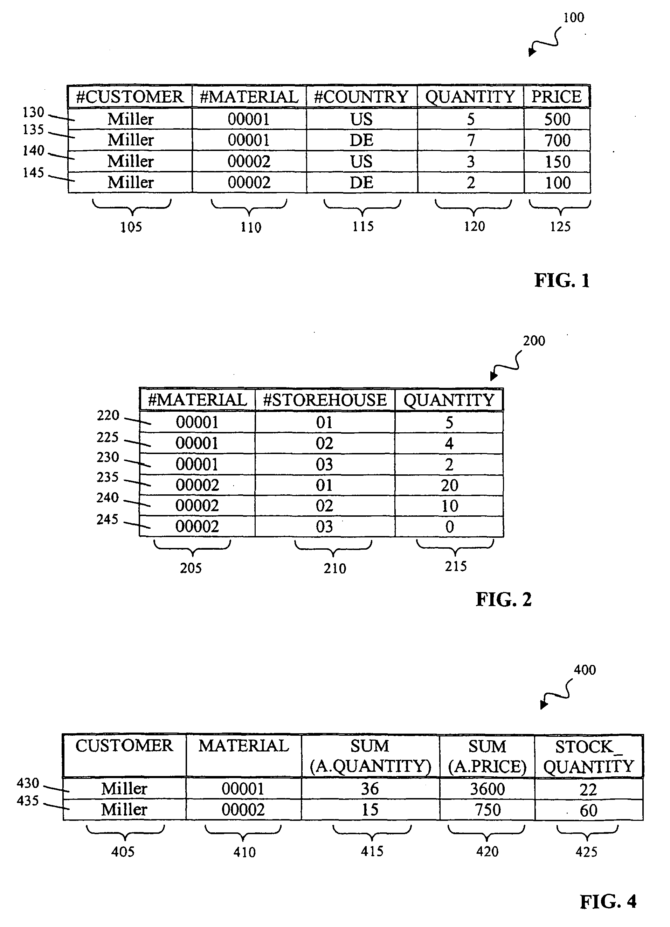

A join can be potentially ambiguous if all key fields of the unique keys of data tables to be joined are not included in either the join condition or as part of a global unique restriction in a query. This is illustrated further herein by way of example. In particular, FIGS. 1 and 2 illustrate a pair of tables in which the # sign identifies key columns that include the key fields of the unique keys of the tables. FIG. 1 schematically represents a table 100 called "ZZSALES." Table 100 describes sales made in the United States and Germany. In particular, table 100 includes a #customer column 105, a #material column 110, a #country column 115, a quantity column 120, and a price column 125. #customer column 105 includes a collection of identifiers of customers in a series of records 130, 135, 140, 145. The customer identifiers in #customer column 105 describe a customer who made a purchase. The customer identifiers are part of a unique key table for table 100 and can be all or part of a foreign key for other tables. #material column 110 includes a collection of identifiers of materials in records 130, 135, 140, 145. The material identifiers in #material column 110 describe a material that was sold. The material identifiers are also part of a unique key table for table 100 and can be all or part of foreign keys for other tables. #country column 115 includes a collection of identifiers of countries in records 130, 135, 140, 145. The country identifiers in #country column 115 describe the country where the sale occurred. The country identifiers are also part of a unique key table for table 100 and can be all or part of foreign keys for other tables. The identifiers in columns 105, 110, 115 are also referred to as "dimensions" or "characteristics" (hereinafter "dimensions") in that they categorize the data in quantity column 120 and a price column 125 for analysis. Dimensions can thus be values that hold little meaning outside the context of a relational database, although that is not the case here.

Quantity column 120 includes a collection of quantity data in a series of records 130, 135, 140, 145. The quantity data in quantity column 120 are a set of values that describe a quantity of materials sold. Price column 125 includes a collection of price data in a series of records 130, 135, 140, 145. The price data in price column 125 are a set of values that describe the price of materials sold. The data in columns 120, 125 are also referred to as "measures" or "key figures" (hereinafter "measures") in that they set forth the values stored in a relational database. Measures are thus often numerical values that can correspond to real-world events and that can be analyzed to understand those events.

FIG. 2 schematically represents a table 200 called "ZZMATERIAL." Table 200 describes materials in stock in the United States and Germany. In particular, table 200 includes a #material column 205, a #storehouse column 210, and a quantity column 215. #material column 205 includes a collection of identifiers of materials in records 220, 225, 230, 235, 240, 245. The material identifiers in #material column 205 describe a material that is in stock. The material identifiers are also part of a unique key table for table 200 and can be foreign keys for other tables. #storehouse column 210 includes a collection of identifiers of storehouses in records 220, 225, 230, 235, 240, 245. The storehouse identifiers in #storehouse column 210 describe the storehouse where the material is kept in stock. The storehouse identifiers are also part of a unique key table for table 200 and can be foreign keys for other tables. The identifiers in columns 205, 210 are also referred to as "dimensions" or "characteristics" in that they categorize the data in quantity column 215 for analysis.

Quantity column 215 includes a collection of quantity data in a series of records 220, 225, 230, 235, 240, 245. The quantity data in quantity column 215 are a set of values that describe a quantity of materials in stock. Tables 100, 200 thus both have unique keys that include more than one field. In particular, table 100 includes customer, material, and country identifiers that are part of its unique key. Table 200 includes material and storehouse identifiers that are part of its unique key.

A query that joins tables 100, 200 on only #material columns 110, 205 is therefore potentially ambiguous and could lead to erroneous results. Table 1 sets forth such a query in which customer identifiers, material identifiers, quantity data, and price data are

**Table 1**

| | |
|---|---|
| select | a.customer, a.material, a.quantity, a.price, b.material, b.quantity as stock_quantity |
| from | zzsales a join zzmaterial b on a.material = b.material |
| where | a.customer = 'Miller'; |

selected from table 100, material identifiers and quantity data (as stock_quality) are selected from table 200. Table 100 is joined to table 200 on #material columns 110, 205 where the customer identifier is restricted to the value "Miller."

FIG. 3 shows a table 300 that illustrates the result set when the query in Table 1 is performed on tables 100, 200. A result set is a set of information that answers a query. A result set can also include metadata regarding the query, such as the number of results returned and the column names. Table 300 includes a customer column 305, a material column 310, a quantity column 315, a price column 320, a second material column 325, and a stock quantity column 330. Columns 305, 310, 315, 320 include data drawn from table 100. Columns 325, 330 include data drawn from table 200.

With the query in Table 1 joining data tables 100, 200 only on #material columns 110, 205 and without a global unique restriction on all key fields of the unique keys of data tables 100, 200, data is unduly repeated in table 300. In particular, since there are three rows in table 200 that can serve as join partners, the data from each row of table 100 that fits the query restrictions appears three times in data table 300. Further, since there are two rows in table 100 that can serve as join partners, the data from each row of table 200 that fits the query restrictions appears twice in data table 300. For example, rows 335, 345, 355 in data table 300 all redundantly include data drawn from row 130 in table 100. Rows 340, 350, 360 in data table 300 all redundantly include data drawn from row 135 in data table 100. Rows 335, 340 in data table 300 both redundantly include data drawn from row 220 in data table 200, and rows 345, 350 in data table 300 both redundantly include data drawn from row 225 in data table 200.

The harm caused by such redundancy is also evident when the result set of a query that includes an ambiguous join is aggregated. Table 2 sets forth such a query in which customer identifiers, material identifiers, quantity data, and price data are selected from table 100, quantity data (as stock_quantity) is selected from data table 200, and the quantity data and price data are summed. Table 100 is joined to data table 200 on #material

**Table 2**

| | |
|---|---|
| select | a.customer, a.material, sum(a.quantity), sum(a.price), sum(b.quantity) as stock_quantity |
| from | zzsales a join zzmaterial b on a.material = b.material |
| where | a.customer ='Miller' |
| group by | a.customer, a.material; |

columns 110, 205 where the customer identifier is restricted to the value "Miller." The result set is grouped by the customer identifiers and material identifiers from table 100.

FIG. 4 shows a data table 400 that illustrates the result set when the query in Table 2 is performed on data tables 100, 200. Data table 400 includes a customer column 405, a material column 410, a quantity sum column 415, a price sum column 420, and a stock quantity column 425.

With the aggregation performed in the query in Table 2, the redundant data that appeared in data table 300 has now been summed in columns 415, 420, 425 to give erroneous results.

### SUMMARY

Systems and techniques for handling potentially ambiguous joins are described. In one aspect, an article includes a machine-readable medium storing instructions operable to cause one or more machines to perform operations. The operations include receiving a join of at least two data structures in a relational database, locally aggregating the first data structure on a first side of the join to yield a first local aggregation, and joining the first local aggregation to data from a second side of the join on the join condition. The join includes a join condition that identifies fewer fields than necessary to define a unique key of a first of the data structures.

This and other aspects can include one or more of the following features. Locally aggregating the first data can include formulating a partial query to aggregate the first data structure. The join can be received in a query that includes the join. The first data structure can be locally aggregated by identifying dimensions and measures in the first data structure that are requested for a result set of the query, formulating a partial query that includes the identified dimensions and measures, and applying the partial query to the first data structure.

Local aggregation of the first data structure can also include identifying a dimension for applying a restriction in the query, formulating the partial query to include the dimension for applying the restriction, identifying a dimension in the join condition, and formulating the partial query to include the dimension in the join condition. The first local aggregation can be joined to data from the second side of the join by applying a restriction in the query to a join of the first local aggregation and a second local aggregation of data from the second side of the join. Joining the first local aggregation to data from the second side of the join can also include including requested dimensions and requested measures in the join.

In a related aspect, a method includes identifying a query that includes a potentially ambiguous join on at least two data structures in a relational database, reducing a number of join partners in at least one of the at least two data structures, and joining data from the at least two data structures on a join condition in the ambiguous join.

This and other aspects can include one or more of the following features. A first of the two data structures can include a collection of key fields to define a unique key. The potentially ambiguous join can omit a first key field from the collection of key fields. Any global unique restriction in the query can also omit the first key field.

The number of join partners can be reduced by eliminating a key field used to define a unique key in one of the data structures or by locally aggregating first data from a first data structure on a first side of the ambiguous join. The number of join partners can also be reduced by locally aggregating second data from a second data structure on a second side of the ambiguous join.

Data can be locally aggregated by identifying dimensions and measures in the first data that are requested for a result set of the query, identifying a dimension for applying a restriction in the query in the first data, identifying a dimension for the potentially ambiguous join in the first data, and formulating a partial query that includes the dimensions and measures requested for the result set, the dimension for applying the restriction, and the dimension in the ambiguous join.

Data from the at least two data structures can be joined by joining the locally aggregated first data to second data from a data structure on a second side of the ambiguous join. Data from the at least two data structures can also be joined by applying a restriction in the query to the data from the at least two data structures, and including dimensions and measures requested in the query in the join of the data from the at least two data structures. The data structures can be data tables.

In a related aspect, an article includes machine-readable medium storing instructions operable to cause one or more machines to perform operations. The operations include receiving a query that includes an ambiguous join of at least two data tables in a relational database, reducing a number of join partners in at least one of the at least two data tables by locally aggregating first data on a first side of the ambiguous join, and joining the locally aggregated first data and second data from the second side of the ambiguous join on a join condition in the ambiguous join. The ambiguous join identifies fewer fields than necessary to define a unique key between the data tables and the unidentified fields are omitted from any global unique restriction in the query.

This and other aspects can include one or more of the following features. The first data can be locally aggregated by identifying dimensions and measures in the first data that are requested for a result set of the query, identifying a dimension in the first data for applying a restriction in the query, identifying a dimension for the ambiguous join in the first data, and formulating a partial query that includes the dimensions and measures requested for the result set, the dimension for applying the restriction, and the dimension for the ambiguous join.

The details of one or more implementations are set forth in the accompanying drawings and the description below. Other features and advantages will be apparent from the description and drawings, and from the claims.

### DESCRIPTION OF DRAWINGS

FIGS. 1 and 2 represent a pair of tables that have multiple key fields to define unique keys.
FIG. 3 is a table that illustrates the result set when a query with an ambiguous join is performed on the tables in FIGS. 1 and 2.
FIG. 4 is a table that illustrates the result set when a query aggregates the result of the performance of an ambiguous join on the tables in FIGS. 1 and 2.
FIG. 5 is a flow chart of a process for handling potentially ambiguous joins where more than one key field is necessary to define a unique key.
FIG. 6 is a flow chart of a process for locally aggregating requested data in a data table.
FIG. 7 is a table that illustrates the result set from the application of a partial query to the table of FIG 1.
FIG 8 is a table that illustrates the result set from the application of a partial query to the table of FIG. 2.
FIG. 9 is a flow chart of a process for joining a local aggregation of data.
FIG 10 is a table that illustrates the result set from the application of a query to the tables of FIGS. 7 and 8.

Like reference symbols in the various drawings indicate like elements.

### DETAILED DESCRIPTION

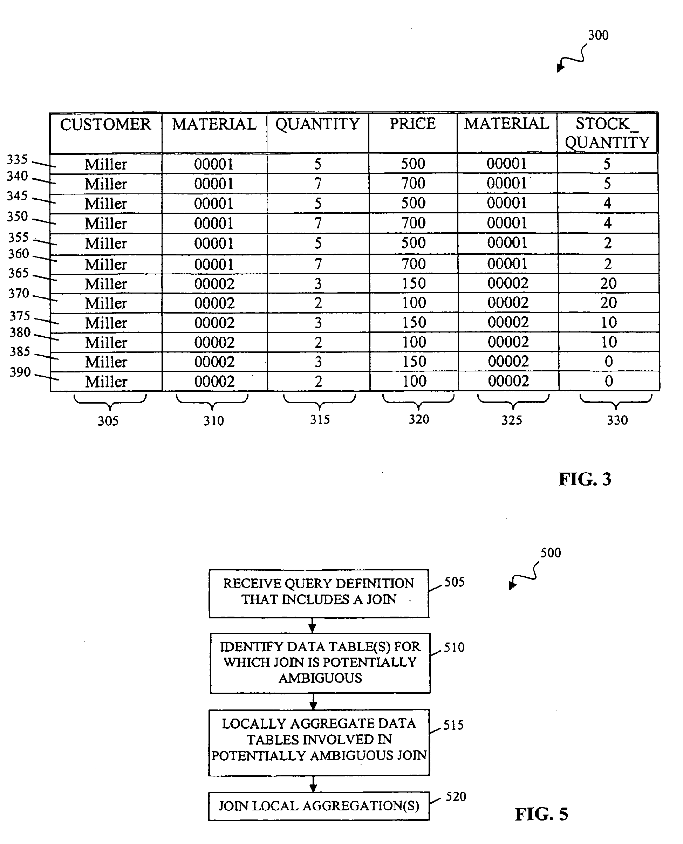

FIG. 5 illustrates a process 500 for handling potentially ambiguous joins. A join is potentially ambiguous if fewer than all the key fields of all join partners are included in the join conditions or as part of a global unique restriction in a query. Process 500 can be performed by one or more data processing devices, software, and/or systems (hereinafter "systems").

The system that performs process 500 can receive a query definition that includes a join at 505. The query definition can be received, e.g., from a user who interacts with the system over one or more input/output devices. The query can be defined in SQL, in another query language, or using proprietary query and data structures and the like.

The system that performs process 500 can identify one or more data tables for which the join is potentially ambiguous at 510. A join is potentially ambiguous for a data table if the join condition does not include all key fields of the unique keys of the data table and the missing key fields are not part of a global unique restriction. A global restriction is a restriction that applies to all data sets of the result set of a query. Global restrictions on fields of a data table are logically ANDed to the join conditions of a data table. A global unique restriction is a global restriction that restricts all data sets of the result set to exactly one value. For example, in the query set forth in Table 2, the restriction that the value of customer column 105 in data table 100 equal "Miller" is both a global restriction and a global unique restriction.

The system can identify that a received query includes a potentially ambiguous join by examining the definition of data tables specified in the query and the nature of the join. For example, the query definition can be parsed to identify join conditions and global unique restrictions. If ambiguity of the join cannot be completely excluded, the data table can be treated as if an ambiguous join has been identified.

An identification of whether a join is potentially ambiguous can include identifying a key column in the table that is neither included in a key column nor referenced in a global unique restriction. For example, in the context of table 100 (FIG. 1) and the query in Table 2, #material column 110 is part of the join condition and #customer 105 column is referenced in a global unique restriction. But #country column 115 is neither part of the join condition nor specified in a global unique restriction. Therefore, a potentially ambiguous join is to be performed on table 100 in the query in Table 2. In another example, in the context of data table 200 (FIG. 2) and the query in Table 2, #material column 205 is part of the join condition. The column #storehouse 210 is neither part of the join condition nor referenced in a global unique restriction. Therefore, a potentially ambiguous join is to be performed on data table 200 in the query in Table 2.

The determination of whether a join is potentially ambiguous can be done for each data table independently. In other words, a join need not be potentially ambiguous for data tables on both sides of the join, but rather a join can be potentially ambiguous for a single data table on one side of the join. Hereinafter, each such data table is referred to as a data table "involved in an ambiguous join."

The system that performs process 500 can also locally aggregate data in any table involved in an ambiguous join at 515. As used herein, a local aggregation is an aggregation that is performed on one data table involved in an ambiguous join.

The local aggregation can be performed using a partial query. A partial query is a subset of the set of criteria set forth in a larger query and produces an intermediate result set. When a larger query includes multiple ambiguous joins, the partial queries can omit the ambiguous joins. Each partial query can yield a partial result set in the form of a data table.

The system that performs process 500 can also join the results of the local aggregation(s) at 520. The results of the local aggregation(s) can be joined with each other or with other data tables not involved in an ambiguous join. For example, an intermediate result set of a partial query can be joined with other data tables and/or other intermediate result sets to yield another result set.

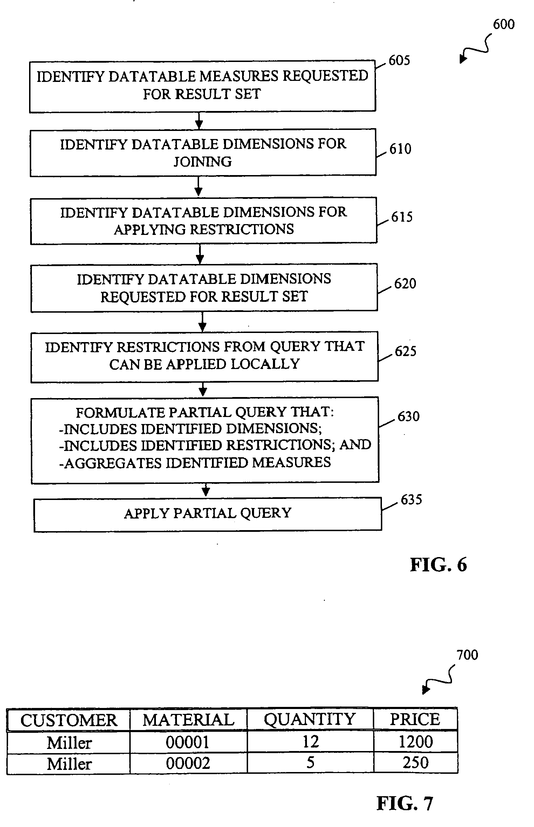

FIG. 6 illustrates a process 600 for locally aggregating data that has been requested in a query. Process 600 can be performed in conjunction with other operations. For example, when two data tables are involved in a single ambiguous join, process 600 can be performed twice, once on each data table. Requested data can thus be aggregated on both sides of the join to perform step 510 of process 500 (FIG 5). Alternatively, when only one of two data tables is involved in a single ambiguous join, process 600 can be performed once on the involved data table. Requested data can thus be aggregated on one side of the join to perform step 520 of process 500 (FIG. 5).

The system that performs process 600 can identify the measures in a data table that are requested by such a query for the result set at 605. Requested measures can be identified by parsing the query definition, e.g., to identify selected measures in an SQL query. For example, in the query set forth in Table 2, the measures requested from table 100 are found in quantity column 120 and price column 125 (FIG 1). As another example, in the query set forth in Table 2, the measures requested from table 200 are found in quantity column 215 (FIG. 2).

The system that performs process 600 can also identify the dimensions in the data table that are to be used to join the data table at 610. The identified dimensions can be those required to join the data table. Such dimensions can be identified by parsing the query definition, e.g., to identify dimensions in the join conditions of an SQL query. For example, in the query set forth in Table 2, the dimensions to be used to join table 100 are found in material column 110 (FIG 1). As another example, in the query set forth in Table 2, the dimensions requested from table 200 are found in material column 205 (FIG 2).

The system that performs process 600 can also identify the dimensions in the data table that are to be used to apply restrictions at 615. A restriction is criteria specified in a query and is commonly used to limit the number of rows whose content is used to respond to the query. Such restrictions can be identified by parsing a query, e.g., to identify dimensions after "where" in an SQL query. For example, in the query set forth in Table 2, the criteria that the value of customer column 105 in table 100 equal 'Miller' is a restriction. The dimension used to apply restrictions to join table 100 is thus found in customer column 105 (FIG 1). No restrictions for dimensions in table 200 (FIG 2) are set forth in the query set forth in Table 2.

The system that performs process 600 can also identify the dimensions in the data table that are requested for the result set at 620. Requested dimensions can be identified by parsing a query, e.g., to identify selected dimensions in an SQL query. For example, in the query set forth in Table 2, the dimensions requested from table 100 are found in customer column 105 and material column 110 (FIG 1). No dimensions from table 200 (FIG. 2) are requested in the query set forth in Table 2.

The system that performs process 600 can also identify restrictions that can be applied locally to the data table at 625. A restriction can be applied locally to a data table when the restriction is a global restriction. For example, in the query set forth in Table 2, the restriction that the value of customer column 105 in table 100 equal 'Miller' can be applied to table 100 without any information about table 200.

The system that performs process 600 can also formulate a partial query to be applied to the data table at 630 and the partial query can be applied to a data table so that data in the data table is locally aggregated at 635. Such a partial query can include the dimensions identified at 610, 615, 620 and the restrictions that can be applied locally and that were identified at 625. Such a partial query can also aggregate the measures identified at 605.

Table 3 sets forth a partial query that locally aggregates customer identifiers, material identifiers, quantity data, and price data from table 100 where the customer identifier is "Miller."

**Table 3**

| | |
|---|---|
| Select | customer, material, sum(quantity) as quantity, sum(price) as price |
| from | zzsales |
| where | customer = 'Miller' |
| group by | customer, material; |

The result set from the application of this partial query to table 100 (FIG. 1) is illustrated in table 700 in FIG. 7. As can be seen, country column 115 has been eliminated and columns 105, 110, 120, 125 have been aggregated. Further, the number of join partners has been reduced to prevent the result set of a join from including redundant data.

Table 4 sets forth another example of such a partial query, namely one that locally aggregates material identifiers and quantity data from table 200.

The result set from the application of this partial query to table 200 (FIG. 2) is

**Table 4**

| | |
|---|---|
| Select | material, sum(quantity) as quantity |
| from | zzmaterial |
| group by | material; |

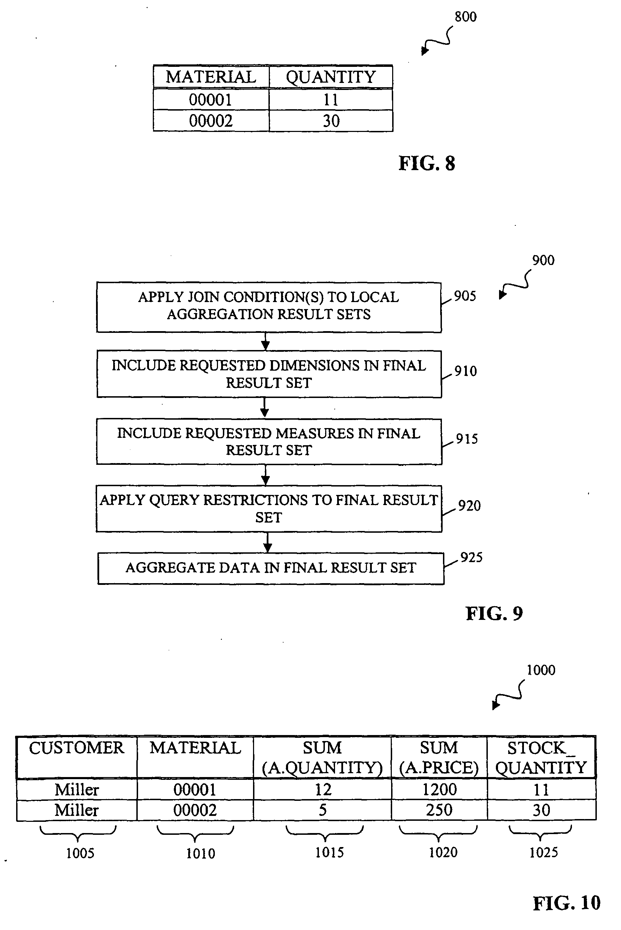

illustrated in table 800 in FIG. 8. As can be seen, storehouse column 210 has been eliminated and columns 205, 215 have been aggregated. Further, the number of join partners has been reduced to prevent the result set of a join from including redundant data.

FIG. 9 illustrates a process 900 for joining a local aggregation of data when a query could include a potentially ambiguous join. Process 900 can thus be performed in conjunction with other operations. For example, when two data tables on different sides of join have been aggregated (i.e., both are involved with an ambiguous join), process 900 can be performed on the locally aggregated tables. Process 900 can thus be used to perform step 520 of process 500 (FIG 5).

The system that performs process 900 can apply the join condition(s) from the ambiguous join to local aggregation result set at 905. A join condition is a search condition that identifies a subset of rows in joined tables based on the relationship between values in the columns. A join condition can be, e.g., based on the key relationships between tables and/or explicitly identified. The ambiguous join condition in the query can be identified by parsing the query. For example, in the query set forth in Table 2, the table 100 is joined to table 200 on the values in material column 110 equaling the values in material column 205.

The system that performs process 900 can also include dimensions requested in the query in the final result set at 910 and include requested measures in final result set at 915. The requested dimensions and measures can be identified by parsing the query.

The system that performs process 900 can also apply any restrictions in the query to final result set at 920. Restrictions that can be applied locally (and are applied during local aggregation such as in process 600, FIG. 6) can be reapplied.

The system that performs process 900 can also aggregate data in the final result set to remove any unnecessary information at 925. Such an aggregation may be particularly appropriate when all the dimensions needed to process the join need not appear in the final result set.

Table 5 sets forth query that joins two local aggregations of data (i.e., table 700 and table 800) from a query that includes an ambiguous join in accordance with process 900. In particular, the query joins local aggregations of data based on the query set forth in Table 2.

The result set from the application of this query to tables 700, 800 (FIGS. 7 and 8) is illustrated in table 1000 in FIG. 10. Table 1000 includes a customer column 1005, a

**Table 5**

| | |
|---|---|
| Select | a.customer, a.material, sum(a.quantity), sum(a.price), sum(b.quantity) as stock_quantity |
| from | table_700 a join table_800 b on a.material = b.material |
| where | a.customer ='Miller' |
| group by | a.customer, a.material; |

material column 1010, a quantity sum column 1015, a price sum column 1020, and a stock quantity column 1025.

With the local aggregation performed before joining, redundant data has been eliminated and the ambiguous join handled to yield appropriate results. In particular, customer Miller has purchased 12 pieces of material 00001 with an overall price of 1200 and five pieces of material 00002 with an overall price of 250. Eleven units of material 00001 and thirty units of material 00002 are available in stock.

Various implementations of the systems and techniques described here can be realized in digital electronic circuitry, integrated circuitry, specially designed ASICs (application specific integrated circuits), computer hardware, firmware, software, and/or combinations thereof. These various implementations can include one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) may include machine instructions for a programmable processor, and can be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing environment that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the environment can be interconnected by any form or medium of digital data communication (e.g., a communication network). Examples of communication networks include a local area network ("LAN"), a wide area network (" WAN"), and the Internet.

A number of implementations have been described. Nevertheless, it will be understood that various modifications may be made. Accordingly, other implementations are within the scope of the following claims.

## Claims

1. An article comprising a machine-readable medium storing instructions operable to cause one or more machines to perform operations comprising:
receiving a join of at least two data structures in a relational database, wherein the join includes a join condition that identifies fewer fields than necessary to define a unique key of a first of the data structures ;
locally aggregating the first data structure on a first side of the join to yield a first local aggregation; and
joining the first local aggregation to data from a second side of the join on the join condition.

2. The article of claim 1, wherein locally aggregating the first data comprises formulating a partial query to aggregate the first data structure.

3. The article of claim 1 or 2, wherein receiving the join comprises receiving a query that includes the join.

4. The article of claim 3, wherein locally aggregating the first data structure comprises:
identifying dimensions and measures in the first data structure that are requested for a result set of the query;
formulating a partial query that includes the identified dimensions and measures; and
applying the partial query to the first data structure.

5. The article of claim 4, wherein locally aggregating the first data structure further comprises:
identifying a dimension for applying a restriction in the query; and
formulating the partial query to include the dimension for applying the restriction.

6. The article of claim 4 or 5, wherein locally aggregating the first data structure further comprises:
identifying a dimension in the join condition; and
formulating the partial query to include the dimension in the join condition.

7. The article of anyone of claims 3 to 6, wherein joining the first local aggregation to data from the second side of the join comprises applying a restriction in the query to a join of the first local aggregation and a second local aggregation of data from the second side of the join.

8. The article of anyone of claims 3 to 7, wherein joining the first local aggregation to data from the second side of the join comprises including requested dimensions and requested measures in the join.

9. A method comprising:
identifying a query that includes a potentially ambiguous join on at least two data structures in a relational database;
reducing a number of join partners in at least one of the at least two data structures; and
joining data from the at least two data structures on a join condition in the ambiguous join.

10. The method of claim 9,wherein:
a first of the two data structures includes a collection of key fields to define a unique key;
the potentially ambiguous join omits a first key field from the collection of key fields; and
any global unique restriction in the query omits the first key field.

11. The method of claim 9 or 10, wherein reducing the number of join partners comprises eliminating a key field used to define a unique key in one of the data structures.

12. The method of anyone of claims 9 to 11, wherein reducing the number of join partners comprises:
locally aggregating first data from a first data structure on a first side of the ambiguous join.

13. The method of claim 12 wherein reducing the number of join partners further comprises:
locally aggregating second data from a second data structure on a second side of the ambiguous join.

14. The method of claim 12 or 13, wherein locally aggregating the first data comprises:
identifying dimensions and measures in the first data that are requested for a result set of the query;
identifying a dimension for applying a restriction in the query in the first data;
identifying a dimension for the potentially ambiguous join in the first data; and
formulating a partial query that includes the dimensions and measures requested for the result set, the dimension for applying the restriction, and the dimension in the ambiguous join.

15. The method of anyone of claims 12 to 14, wherein joining data from the at least two data structures comprises joining the locally aggregated first data to second data from a data structure on a second side of the ambiguous join.

16. The method of anyone of claims 9 to 15, wherein joining data from the at least two data structures comprises:
applying a restriction in the query to the data from the at least two data structures; and
including dimensions and measures requested in the query in the join of the data from the at least two data structures.

17. The method of anyone of claims 9 to 16, wherein the data structures comprise data tables.

18. An article comprising a machine-readable medium storing instructions operable to cause one or more machines to perform operations comprising:
receiving a query that includes an ambiguous join of at least two data tables in a relational database, wherein the ambiguous join identifies fewer fields than necessary to define a unique key between the data tables and the unidentified fields are omitted from any global unique restriction in the query;
reducing a number of join partners in at least one of the at least two data tables by locally aggregating first data on a first side of the ambiguous join; and
joining the locally aggregated first data and second data from the second side of the ambiguous join on a join condition in the ambiguous join.

19. The article of claim 18, wherein locally aggregating the first data comprises:
identifying dimensions and measures in the first data that are requested for a result set of the query; identifying a dimension in the first data for applying a restriction in the query; identifying a dimension for the ambiguous join in the first data; and
formulating a partial query that includes the dimensions and measures requested for the result set, the dimension for applying the restriction, and the dimension for the ambiguous join.
